# EUROPEAN PATENT SPECIFICATION

(11) **EP 2 726 169 B1**
(45) Date of publication and mention of the grant of the patent: **20.02.2019**
(21) Application number: 12805281.8
(22) Date of filing: 29.06.2012
(51) Int. Cl.: B01D 35/14, B01D 35/00, B01D 35/30, B01D 35/157

(54) **FILTER HEAD, AND FILTER ASSEMBLY AND WATER TREATMENT APPARATUS HAVING THE SAME**
FILTERKOPF SOWIE FILTERANORDNUNG UND ABWÄSSERBEHANDLUNGSVORRICHTUNG DAMIT
TÊTE DE FILTRE, ENSEMBLE FILTRE ET APPAREIL DE TRAITEMENT D'EAU COMPORTANT CEUX-CI

(30) Priority: 30.06.2011 KR 20110064853; 25.06.2012 KR 20120068015
(43) Date of publication of application: 07.05.2014
(73) Proprietor: Coway Co., Ltd., Chungcheongnam-do 314-895 (KR)
(72) Inventor: SEO, Young-Ju, Seoul 151-185 (KR); KWON, Claude, Seoul 151-185 (KR); MOON, Hyoung-Min, Seoul 151-185 (KR); LEE, Jun-Young, Seoul 151-185 (KR)
(74) Representative: Nederlandsch Octrooibureau
(86) International application number: PCT/KR2012/005195
(87) International publication number: WO 2013/002606

(56) References cited:
- EP-A1- 2 206 543
- DE-A1- 3 100 499
- JP-A- 2000 501 648
- KR-A- 20100 070 874
- KR-A- 20100 081 827
- KR-A- 20100 119 621
- US-A1- 2004 129 627
- US-A1- 2009 057 213

## Description

### Technical Field

The present invention relates to a filter head having a filter mounted therein and, more particularly, to a filter head having a filter mounted therein allowing a portion of flow to pass directly therethrough without passing through a filter to thus satisfy water quality standards and lengthen a life span of the filter, and used for generating a material through mixing or dissolving such as generating a scale removal solution for removing scales from a pipe.

### Background Art

A water softener and a water purifier are widely known as water treatment apparatuses. A water softener is an apparatus for filtering raw water such as tap water, or the like, to remove dissolved solids (or hardness components) therefrom, while a water purifier is an apparatus for filtering raw water to remove undesirable chemicals to produce water fit for a specific purpose, such as drinking water.

A water purifier and a water softener have a common point in that they both use a filter.

A filter is a device for removing foreign objects or dissolved solids in a physical manner, so it is required to be periodically replaced. A filter is mounted in a filter head to constitute a filter assembly, a used filter is removed from the filter head and a new filter is mounted therein.

Here, a technique of installing a fluid blocking unit in a filter head adapted to prevent raw water introduced to the filter head from leaking, while removing an old filter to mount a new filter is disclosed in Korean Patent Registration No. 521116.

In this document, a filter is comprised of a head and a body, and a fluid blocking unit is installed within the head to prevent a fluid introduced from an inflow portion from leaking when the body is removed from the head. Thus, raw water can be blocked even without a raw water blocking valve on an outer side of a water purifier, enhancing refinements in appearance and user convenience.

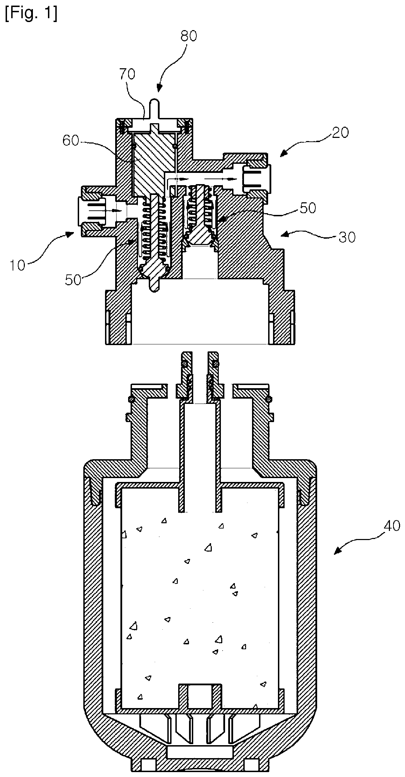

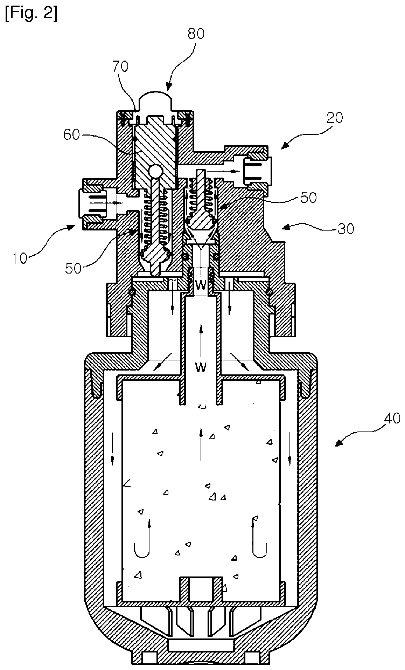

FIG. 1 is a cross-sectional view of a water purifier filter having a fluid blocking unit according to the related art, while FIG. 2 is a view illustrating an operational state of the water purifier filter having a fluid blocking unit according to the related art.

With reference to FIGS. 1 and 2, the filter having a fluid blocking unit according to the related art includes a head 30 including a raw water inflow unit 10 comprised of an inlet port and a guide passage and a raw water outflow unit 20 comprised of an outlet port and a passage, and a water purifying filter 40 rotatably fastened to the head 30 and purifying raw water introduced thereto. A fluid blocking member 50 is installed in the guide passage to control opening and closing of the guide passage by means of spring force when the head 30 and the water purifying filter 40 are separated. A selective flow control unit 80 is provided on an upper side of the fluid blocking member 50. The selective flow control unit 80 is comprised of a knob 60 having a connection passage to provide selective control such that a fluid introduced through the guide passage is introduced into the water purifying filter 40, and an opening and closing rotation member 70. In exchanging a water purifying filter, a user may rotate the opening and closing rotation member to control an amount of introduced raw water and selectively move it to the outlet port or the filter.

Since the filter having the fluid blocking unit according to the related art is required to have the selective flow control unit installed in the head in order to control raw water according to exchanging of the filter, unit cost and a fabrication process are increased. Also, the user should rotate the opening and closing rotation member to control raw water, causing user inconvenience, and the opening and closing rotation member may be abraded due to a repeated rotational operation to thereby cause a water leak.

In addition, when the filter having the fluid blocking unit according to the related art is mounted, the entirety of introduced flow is supplied to the filter, and here, since the entirety of water passes through the filter, material filtered out by the filter is increased accordingly, and thus, a life span of the filter is shortened.

In particular, in the case of a water softener, performance thereof can be achieved by removing dissolved solids even to a certain level, and since the degree of dissolved solids contained varies by region, letting the entire amount of water pass through the filter shortens the life span of the filter.

Also, in case of a water purifier, water continuously passes through a plurality of filters, and in case of a filter for removing minerals, it may not be desirable to remove all minerals entirely.

US 2004/129627 A1 discloses that water introduced to a filter head through a conduit flows into a main housing of a filter cartridge through opening, and is filtered while passing through a filter media in the main housing. The filtered water flows through a tube in the filter media and is discharged through a conduit of the filter head. A portion of the water introduced through the conduit flows through a bypass and is discharged directly through the conduit of the filter together with water filtered by the filter media.

EP 2 206 543 A1 discloses that a bypass path is formed between a head member and a valve cover to detour around a filter assembly such that the fluid flown into an inlet of the valve cover is discharged directly through an outlet of the valve cover. When a filter assembly is separated from a valve assembly, a head member is moved downwardly, thereby opening the bypass, and when the filter assembly is mounted, the head member is moved upwardly, thereby sealing the bypass.

### Disclosure of Invention

### Technical Problem

An aspect of the present invention provides a filter head allowing a user to select a life span of a filter and a degree of filtration provided thereby.

An aspect of the present invention also provides a filter head having a filter that can be controlled to be used by region or according to user preference.

An aspect of the present invention also provides a filter head having a filter structure such that raw water does not leak when a filter is exchanged, providing a reliable operation, and having durability.

An aspect of the present invention also provides a water treatment apparatus having a long-life filter, lengthening a replacement period and thus saving costs accordingly.

An aspect of the present invention also provides a filter head used for making a material through mixing or dissolving such as making a scale removal solution for removing scales from a pipe.

### Solution to Problem

According to an aspect of the present invention, there is provided a filter head according to claim 1.

The filter head includes: an inflow passage communicating with an inflow portion; an outflow passage communicating with an outflow portion; a filter introduction hole communicating with the inflow passage, to which an introduction portion of a filter is connected when the filter is mounted to allow a partial flow of a fluid introduced through the inflow portion to be introduced to the filter; a filter discharge hole communicating with the outflow passage, to which a discharge portion of the filter is connected when the filter is mounted to allow a fluid which has passed through the filter to be expelled through the outflow portion; and a bypass flow channel connecting the inflow passage and the outflow passage and allowing the remaining flow of the fluid introduced through the inflow portion to pass therethrough so as to be expelled together with the fluid which has passed through the filter, through the outflow portion.

The filter head further includes first and second opening and closing units provided in the filter head main body such that, when the filter is mounted, the first and second opening and closing units communicate with the inflow passage and the filter introduction hole and the outflow passage and the filter discharge hole, and when the filter is separated, the first and second opening and closing units do not communicate therewith.

The first and second opening and closing units may include pressing portions formed in a lower portion thereof, blocking portions with seals formed on an outer circumference thereof, and guide portions formed in an upper portion thereof and guiding a movement, respectively, wherein elastic members are disposed between the first and second opening and closing units and the filter head main body in order to press the first and second opening and closing units toward the filter introduction hole and the filter discharge hole.

The first and second opening and closing units are configured to allow a partial flow of the fluid introduced through the inflow portion to pass through the bypass flow channel when the filter is mounted.

A gap is formed between the filter head main body and the first and second opening and closing units when the filter is mounted in order to allow a partial flow of the fluid introduced through the inflow portion to pass through the bypass flow channel.

The first and second opening and closing units may be configured to allow the entirety of the fluid introduced through the inflow portion to be expelled to the outflow portion through the bypass flow channel when the filter is separated.

One or more of the first and second opening and closing units include a gap adjusting unit for adjusting the gap.

The gap adjusting unit includes a manipulation portion protruded to the outside of the filter head main body and a variable portion changing a width of the gap according to an operation of the manipulation portion.

The filter head main body may be configured to form a gap with the first and second opening and closing units in a vertical direction between the inflow passage and the outflow passage, and the variable portion may adjust the height of the first and second opening and closing units such that the gap between the filter head main body and the first and second opening and closing units is adjusted in a vertical direction.

The variable portion may be coupled to a main body of the first or second opening and closing unit and adjust the height of the first or second opening and closing unit by rotating the manipulation portion.

The filter head main body may include a cover configured to be separated from the filter head main body at an upper side of the first or second opening and closing unit.

According to another aspect of the present invention, there is provided a filter assembly including: the forgoing filter head; and a filter mounted in the filter head.

According to another aspect of the present invention, there is provided a water treatment apparatus including the foregoing filter assembly.

### Advantageous Effects of Invention

Through the foregoing configuration, the present invention can provide a filter head in which a life span of a filter and a degree of filtration can be selected by a user.

Also, the present invention can provide a filter head having a filter controlled to be used according to user preference.

Also, the present invention can provide a filter head having a filter structure not allowing raw water to leak when a filter is exchanged, which is reliably operated and has durability.

In addition, when the entirety of a fluid introduced to a filter head is not required to be supplied to a filter, a partial flow thereof is controlled to pass through a bypass flow path, whereby a water treatment apparatus having a long-life filter, lengthening a replacement period and thus saving costs accordingly can be provided.

In addition, a filter head used for making a material through mixing or dissolving such as making a scale removal solution for removing scales from a pipe can be provided.

### Brief Description of Drawings

FIG. 1 is a cross-sectional view of a water purifier filter having a fluid blocking unit according to the related art.
FIG. 2 is a view illustrating an operational state of the water purifier filter having a fluid blocking unit according to the related art.
FIGS. 3 and 4 are cross-sectional views of a filter head with a filter mounted therein according to an embodiment of the present invention.
FIG. 5 is a cross-sectional view of the filter head in a state in which the filter is removed according to an embodiment of the present invention.
FIG. 6 is an exploded cross-sectional view of the filter head according to an embodiment of the present invention.
FIGS. 7 and 8 are cross-sectional views of the filter head with a modified first opening and closing unit according to an embodiment of the present invention.
FIGS. 9 and 10 are cross-sectional views of a filter head according to another embodiment of the present invention.
FIGS. 11 and 12 are cross-sectional views showing a varying unit is changed as a manipulation unit is manipulated in the filter head according to another embodiment of the present invention.
FIG. 13 is a graph showing a comparison of performance over time when the filter head of the present invention and that of the related art are used.

### Mode for the Invention

Hereinafter, an embodiment of the present invention will be described in detail with reference to the accompanying drawings.

The embodiment described hereinafter is an embodiment of the present invention and the coverage of the present invention is determined by claims and not limited to the embodiment described hereinafter.

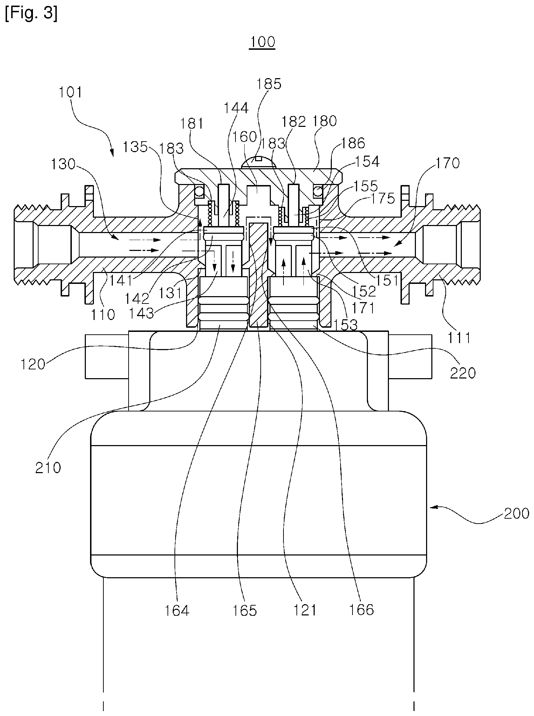

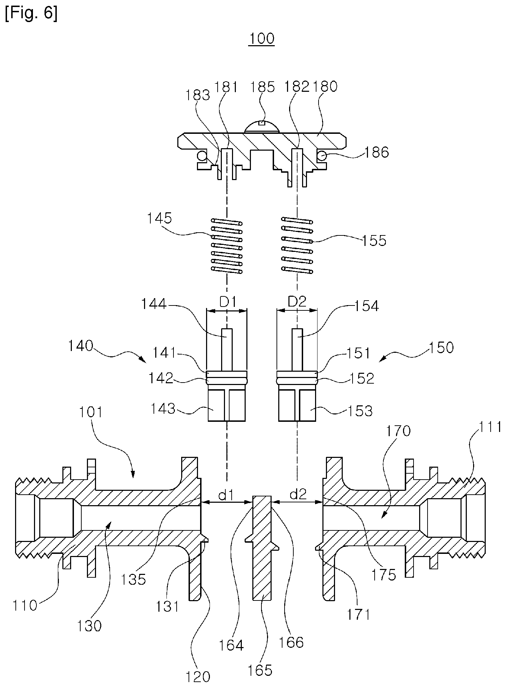

FIGS. 3 through 6 are cross-sectional and exploded cross-sectional views of a filter head according to an embodiment of the present invention.

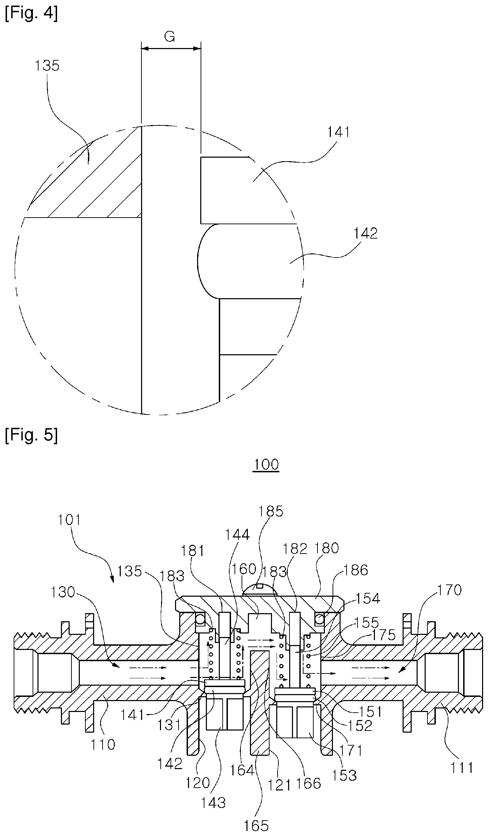

As shown in FIGS. 3 and 5, the filter head 100 may include a filter head main body 101.

The filter head main body 101 may have an inflow portion 110 formed in one side thereof and allowing a fluid such as raw water like tap water, or the like, to be introduced therethrough, and an outflow portion 111 formed in the other side thereof and allowing a fluid which has passed through a filter or which has bypassed the filter to be expelled therethrough.

An inflow passage 130 communicating with the inflow portion 110 may be formed within the filter head main body 101. An outflow passage 170 communicating with the outflow portion 111 may be formed within the filter head main body 101.

A filter introduction hole 120 may be provided on a lower surface of the filter head main body 101. The filter introduction hole 120 may communicate with the inflow passage 130. When the filter 200 is mounted, the filter introduction hole 120 may be connected with an introduction portion 210 of the filter 200 allowing a fluid such as raw water, or the like, to be supplied therethrough. Accordingly, a partial flow of the fluid introduced through the inflow portion 110 is introduced to the filter 200.

A filter discharge hole 121 may be provided on a lower surface of the filter head main body 101. The filter discharge hole 121 may communicate with the outflow passage 170. When the filter 200 is mounted, the filter discharge hole 121 may be connected with a discharge portion 220 of the filter 200 allowing a fluid which has passed through the filter 200 to be expelled therethrough. Accordingly, the fluid which has passed through the filter is expelled through the outflow portion 111.

A bypass flow channel 160 may be provided in the filter head main body 101. The bypass flow channel 160 may connect the inflow passage 130 and the outflow passage 170. Accordingly, a remaining flow of the fluid introduced through the inflow portion 110 may be passed through the bypass flow channel 160 and expelled through the outflow portion 111 together with the fluid which has passed through the filter 200.

Accordingly, when the filter 200 mounted in the filter head 100 is, for example, a water purifying filter, a partial flow of raw water introduced through the inflow portion 110 passes through the filter 200, i.e., a water purifying filter, so as to be filtered and expelled through the outflow portion 111, and the other remaining flow of raw water passes through the bypass flow path 160 so as to be expelled through the outflow portion 111. Namely, a partial flow of the raw water filtered by the filter 200 as a water purifying filter and the remaining flow of the raw water which has passed through the bypass flow channel 160 may be mixed and expelled through the outflow portion 111.

Also, when the filter 200 mounted in the filter head 100 includes a component for removing scales of, for example, a pipe, the component for removing scales from a pipe included in the filter 200 may be dissolved while a partial flow of the raw water introduced through the inflow portion 110 is passing through the filter 200 so as to be expelled through the outflow portion 111. The remaining flow of the raw water may pass through the bypass flow channel 160 so as to be expelled through the outflow portion 111. Namely, a partial flow of the raw water in which the component for removing scales from a pipe is dissolved and the remaining flow of the raw water which has passed through the bypass flow channel 160 are mixed and expelled through the outflow portion 111.

Accordingly, a scale removal solution for removing scales from a pipe can be easily generated. Besides such a scale removal solution, a material can be easily generated through mixing or dissolving.

The bypass flow channel 160 may be formed between a separating unit 165 and a cover 180 formed in a central portion of the filter head main body 101. Namely, the bypass flow channel 160 is formed to communicate with the filter introduction hole 120 and the filter discharge hole 121 so as to be associated with first and second opening and closing units 140 and 150 as described hereinafter.

However, the configuration of the bypass flow channel 160 is not limited thereto and the bypass flow channel 160 may not communicate with the filter introduction hole 120 and the filter discharge hole 121 so as to communicate with the first and second opening and closing units 140 and 150, as long as it is configured to connect the inflow passage 130 and outflow passage 170.

Namely, apart from the filter introduction hole 120 communicating with the inflow passage 130 and the filter discharge hole 121 communicating with the outflow passage 170, the bypass flow channel 160 is connected to the inflow passage 130 and the outflow passage 170 to connect the inflow passage 130 and the outflow passage 170.

Accordingly, a partial flow of a fluid moving along the inflow passage 130 after being introduced through the inflow portion 110 is introduced to the filter introduction hole 120, and the remaining flow of the fluid may be introduced to the bypass flow channel 160 connected to the inflow passage 130 apart from the filter introduction hole 120. A partial flow of the fluid introduced into the filter introduction hole 120 is introduced to the filter discharge hole 121 through the filter 200 and moves along the outflow passage 170 so as to be expelled through the outflow portion 111. Also, the remaining flow of the fluid introduced into the bypass flow channel 160 moves along the outflow passage 170 through the bypass flow channel 160 and then is expelled through the outflow portion 111.

Meanwhile, the filter head 100 may further include first and second opening and closing units 140 and 150. The first and second opening and closing units 140 and 150 may be disposed within the filter head main body 101. The first opening and closing unit 140 is positioned in a region in which the bypass flow channel 160, the filter introduction hole 120, and the inflow passage 130 meet, and the second opening and closing unit 150 may be positioned in a region in which the bypass flow channel 160, the filter discharge hole 121 and the outflow passage 170 meet.

By the first and second opening and closing units 140 and 150, the inflow passage 130 and the filter introduction hole 120 and the outflow passage 170 and the filter discharge hole 121 may communicate with each other, respectively, when the filter 200 is mounted. When the filter 200 is separated, the inflow passage 130 and the filter introduction hole 120 and the outflow passage 170 and the filter discharge hole 121 may not communicate with each other, respectively.

To this end, the first opening and closing unit 140 may include a blocking portion 141 with a sealing 142 formed on an outer circumference thereof, a pressing portion 143 protruded downwardly from the blocking portion 141 to have a cross shape, and a guide portion 144 inserted into a guide recess 181 of the cover 180 in an upper portion of the blocking portion 141 and guiding a movement direction of the first opening and closing unit 140.

Also, an elastic member 145 may be disposed between the first opening and closing unit 140 and the filter head main body 101. The first opening and closing unit 140 may be pressed toward the filter introduction hole 120 by the elastic member 145. In the embodiment illustrated in FIGS. 3 through 6, the elastic member 145 is disposed between an upper surface of the blocking portion 141 and a maintaining portion 183 of the cover 180, and presses the first opening and closing unit 140 downwardly, namely, toward the filter introduction hole 120.

The pressing portion 143 of the first opening and closing unit 140 has a diameter smaller than that of the blocking portion 141, and the filter head main body 101 has a protruded blocking portion 131 having a diameter greater than that of the pressing portion 143 and smaller than that of the blocking portion 141 in the filter introduction hole 120.

Accordingly, when the filter 200 is separated, even in the case that the first opening and closing unit 140 is pressed by the elastic member 145, it cannot be released from the filter introduction hole 120, and since the sealing 142 disposed on the outer circumference of the blocking portion 141 is tightly attached to the protruded blocking portion 131, a fluid introduced along the inflow passage 130 can be prevented from flowing to the filter introduction hole 120.

Similarly, the second opening and closing unit 150 includes a blocking portion 151 with a sealing 152 formed on an outer circumference thereof, a pressing portion 153 protruded downwardly from the blocking portion 151 to have a cross shape, and a guide portion 154 inserted into a guide recess 182 of the cover 180 in the upper portion of the blocking portion 151 and guiding a movement direction of the second opening and closing unit 150.

Also, an elastic member 155 may be disposed between the second opening and closing unit 150 and the filter head main body 101. The second opening and closing unit 150 may be pressed toward the filter discharge hole 121 by the elastic member 155. In the embodiment illustrated in FIGS. 3 through 6, the elastic member 155 is disposed between an upper surface of the blocking portion 151 and the cover 180, and presses the second opening and closing unit 150 downwardly, namely, toward the filter discharge hole 121.

The pressing portion 153 of the second opening and closing unit 150 has a diameter smaller than that of the blocking portion 151, and the filter head main body 101 has a protruded blocking portion 171 having a diameter greater than that of the pressing portion 153 and smaller than that of the blocking portion 151 in the filter discharge hole 121.

Accordingly, when the filter 200 is separated, even in the case that the second opening and closing unit 150 is pressed by the elastic member 155, it cannot be released from the filter discharge hole 121, and since the sealing 152 disposed on the outer circumference of the blocking portion 151 is tightly attached to the protruded blocking portion 171, a fluid introduced along the bypass flow channel 160 can be prevented from flowing to the filter discharge hole 121.

Meanwhile, the cover 180 is detachably disposed on an upper surface of the filter head main body 101. The cover 180 is connected to the filter head main body 101 by a bolt 185, and a gap between the filter head main body 101 and the cover 180 is sealed by a sealing unit 186.

The cover 180 covers upper portions of the first opening and closing unit 140 and the second opening and closing unit 150, and the first opening and closing unit 140 and the second opening and closing unit 150 may be taken out by removing the cover 180.

The guide recesses 181 and 182 are formed on a lower surface of the cover 180 such that they correspond to the first and second opening and closing units 140 and 150, respectively, and the maintaining portion 183 for maintaining the elastic member 145 may be formed. In this respect, however, when the guide portions 144 and 154 are inserted into the guide recesses 181 and 182, the elastic member 155 cannot escape from the guide portion 154, there is no problem without an extra maintaining portion therefor.

Meanwhile, the first and second opening and closing units 140 and 150 may be configured to allow a partial flow of a fluid introduced through the inflow portion 110 to pass through the bypass flow channel 160, when the filter 200 is mounted. To this end, a gap G is formed between the filter head main body 101 and the first and second opening and closing units 140 and 150 when the filter 200 is mounted to allow a partial flow of the fluid introduced through the inflow portion 110 to pass therethrough to the bypass flow channel 160.

Also, the first and second opening and closing units 140 and 150 may be configured to allow the entirety of the fluid introduced through the inflow portion 110 to be expelled through the outflow portion 111 through the bypass flow channel 160, when the filter 200 is separated.

In the embodiment illustrated in FIGS. 3 through 6, the bypass flow channel 160 is formed between the cover 180 and the separating portion 165. When the filter 200 is mounted, a fluid such as raw water, or the like, is introduced to the bypass flow channel 160 through the gap G between the first opening and closing unit 140 and wall surfaces 135 and 164, and when the filter 200 is separated, the entire amount of fluid introduced through the inflow portion 110 pass through the bypass flow channel 160.

In the present embodiment, an inner diameter d1 of the wall surfaces 135 and 164 may be formed to be greater than an outer diameter D1 of the blocking portion 141 (d1>D1) such that the gap G may be formed between the blocking portion 141 of the first opening and closing unit 140 and the wall surfaces 135 and 164 when the filter 200 is installed. Thus, in the present embodiment, irrespective of whether or not the filter 200 is installed, a certain amount or more of the flow of the fluid introduced through the inflow portion 110 is constantly expelled through the outflow portion 111 through the bypass flow channel 160.

In the same manner, a gap G is formed between the second opening and closing unit 150 and wall surfaces 166 and 175, and to this end, an inner diameter d2 of the wall surfaces 166 and 175 may be formed to be greater than an outer diameter D2 of the blocking portion 151 (d2>D2). Thus, a fluid introduced to the bypass flow channel 160 may constantly flow to the outflow portion 111.

FIGS. 3, 4, and 5 illustrate an operational state according to an embodiment of the present invention. FIG. 3 illustrates a configuration in which the filter 200 is installed, and FIG. 5 illustrates a configuration in which the filter 200 is separated.

As illustrated in FIGS. 3 and 4, when the filter 200 is mounted, the introduction portion 210 and discharge portion 220 of the filter 200 press the pressing portions 143 and 153 of the first opening and closing unit 140 and the second opening and closing unit 150, respectively, to raise the first opening and closing unit 140 and the second opening and closing unit 150, and accordingly, in the filter head 100, a fluid introduced through the inflow portion 110 flows along the inflow passage 130 and as the fluid passes through the first opening and closing unit 140, a portion of the fluid is introduced into the introduction portion 210 of the filter 200 and another portion of the fluid flows to the bypass flow channel 160 through the gap G between the first opening and closing unit 140 and the wall surfaces 135 and 164.

The fluid introduced into the introduction portion 210 of the filter 200 is filtered as it passes through the filter 200, expelled to the discharge portion 220, and then, introduced into the filter discharge hole 121 of the filter head 101.

The fluid introduced through the bypass flow channel 160 flows to the outflow passage 170 through the gap G between the second opening and closing unit 150 and the wall surfaces 166 and 175, is mixed with the filtered fluid introduced to the filter discharge hole 121 in the outflow passage 170, and expelled to the outside of the filter head 101 through the outflow portion 111.

Here, the fluid passing through the bypass flow channel 160 does not pass through the filter 200, and the amount of fluid passing through the bypass flow channel 160 may be adjusted by adjusting the gap G between the first opening and closing unit 140 and the wall surfaces 135 and 164.

Next, as illustrated in FIG. 5, when the filter 200 is detached, the first opening and closing unit 140 and the second opening and closing unit 150 are not pressed by the introduction portion 210 and the discharge portion 220 of the filter 200 but pressed by the elastic members 145 and 155 to the filter introduction hole 120 and the filter discharge hole 121, respectively. Thus, the sealing 142 of the first opening and closing unit 140 is in contact with the protruded blocking portion 131, and the sealing 152 of the second opening and closing unit 150 is in contact with the protruded blocking portion 171, thus sealing the filter introduction hole 120 and the filter discharge hole 121.

Also, since the first and second opening and closing units 140 and 150 have been moved downwardly by the elastic members 145 and 155, respectively, the gap G between the wall surfaces 135 and 164 and the blocking portion 141 of the first opening and closing unit 140 and the gap G between the wall surfaces 166 and 175 and the blocking portion 151 of the second opening and closing unit 150 is considerably increased. Thus, the entirety of the flow of the fluid introduced through the inflow portion 110 is expelled to the outflow portion 111 through the bypass flow channel 160.

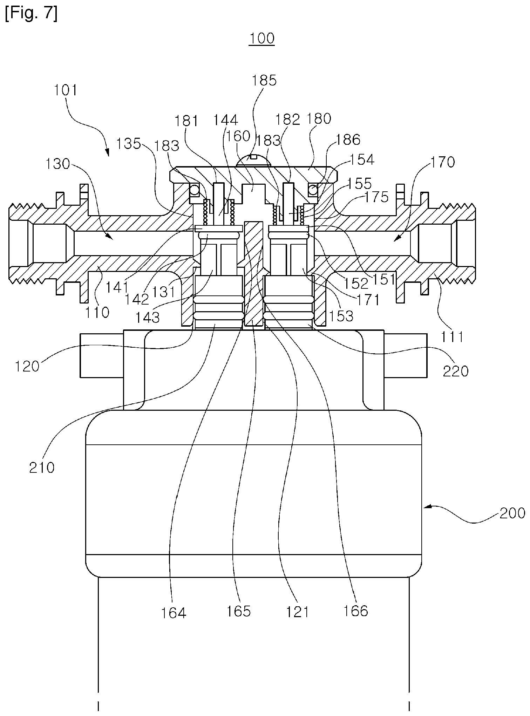

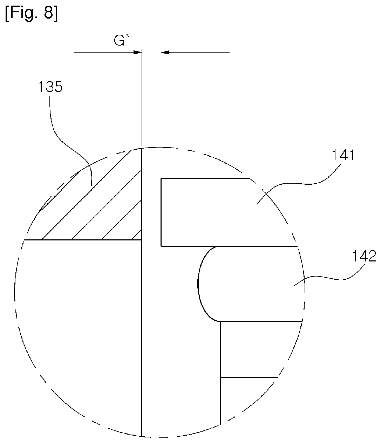

FIGS. 7 and 8 illustrate cross-sections in which the first opening and closing unit 140 is replaced in order to adjust an amount of flow to the bypass flow channel 160 in the embodiment of the present invention described above with reference to FIGS. 3 through 6.

As illustrated in FIGS. 7 and 8, the outer diameter D1 (Please see FIG. 5) of the blocking portion 141 of the first opening and closing unit 140 is increased. Thus, a gap G' between the outer diameter D1 of the blocking portion 141 of the first opening and closing unit 140 and the inner diameter d1 (Please see FIG. 5) of the wall surfaces 135 and 164 is reduced in comparison to the gap G illustrated in FIGS 3 through 5.

Accordingly, when the filter 200 is mounted, a flow of the fluid introduced through the inflow portion 110 is reduced when the fluid flows to the bypass flow channel 160 through the gap G'

As described above, in an embodiment of the present invention, the cover 180 is separable, so the flow bypassed through the bypass flow channel 160 can be adjusted when the first opening and closing unit 140 or the second opening and closing unit 150 having the blocking portions 141 or 151 is replaced by a different first opening and closing unit or second opening and closing unit whose blocking portion has a different outer diameter by separating the cover 180.

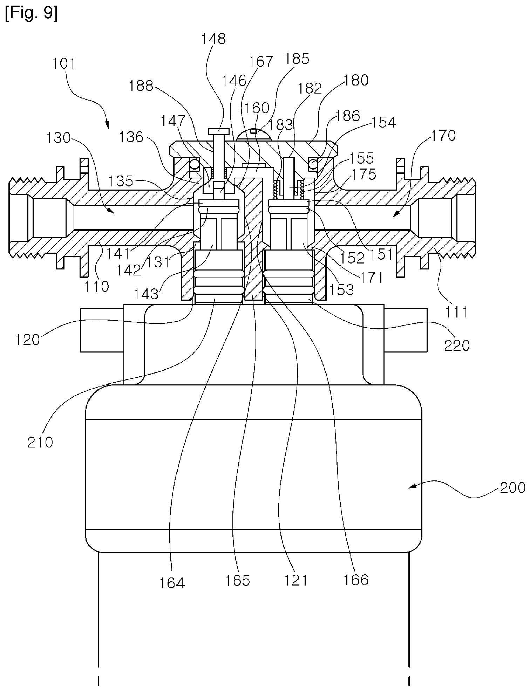

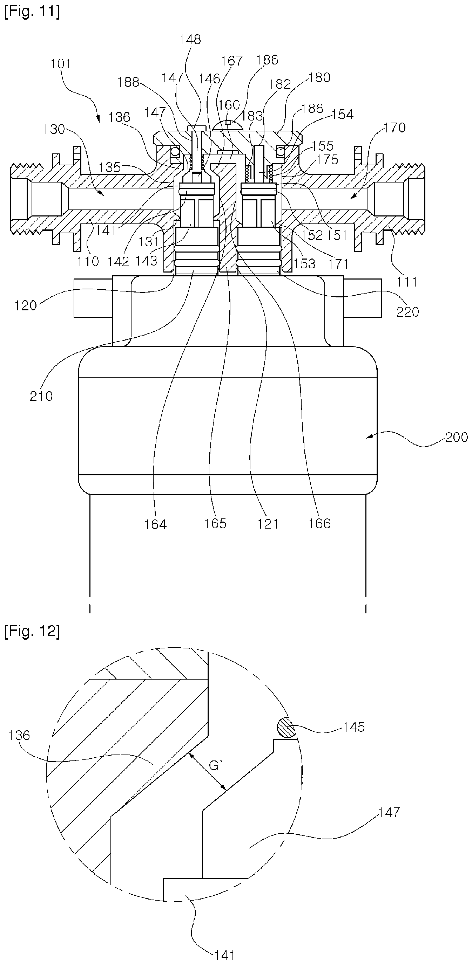

FIGS. 9, 10, 11, and 12 illustrate another embodiment of the present invention in which the gap G is adjustable.

In the embodiments illustrated in FIGS. 9, 10, 11, and 12, a general configuration is the same as that described above with reference to FIGS. 3 through 6, so only a difference will be described and parts not described will be replaced by the description of FIGS. 3 through 6.

One or more of the first and second opening and closing units 140 and 150 may have a gap adjusting unit for adjusting the gap G.

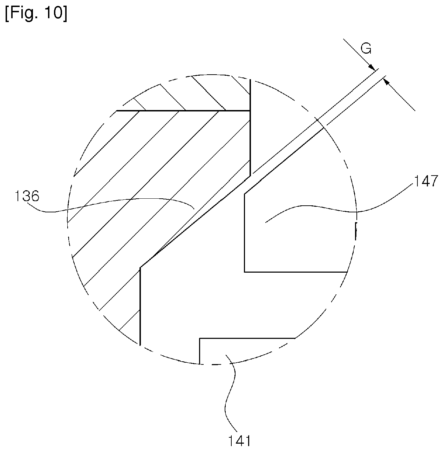

In FIGS. 9 and 10, the first opening and closing unit 140 includes a coupling portion 146 instead of the guide portion 144 (Please see FIG. 3), a variable portion 147 coupled to the coupling portion 146, and a manipulation portion 148 connected to the variable portion 147 such that it is integrally moved with the variable portion 147, and exposed to the outside through a guide hole 188 formed on the cover 180.

As described above, the filter head main body 101 may be configured such that the gap G is formed with respect to the first and second opening and closing units 140 and 150 in a vertical direction between the inflow passage 130 and the outflow passage 170.

The variable portion 147 may be configured to adjust the height of the first and second opening and closing units 140 and 150 such that the gap G in the filter head main body 101 is adjusted.

Also, the varying unit 147 is screw-coupled to a main body of the first or second opening and closing unit 140 or 150, and the variable portion 147 may adjust the height of the first or second opening and closing unit 140 or 150 by rotating the manipulation portion 148.

To this end, the variable portion 147 includes a sloped surface, connected to the coupling portion 146 through a thread, so that when the manipulation portion 148 is rotated, the variable portion 147 rises along the thread formed on the coupling portion 146, and accordingly, the overall height of the first opening and closing unit 140 may be changed.

Meanwhile, in comparison to the wall surfaces 135 and 164 illustrated in FIGS. 3 through 5, in the present embodiment, protruded sloped surfaces 136 and 167 are formed to correspond to the sloped surface of the variable portion 147, and accordingly, the gap G is also formed between the sloped surface of the variable portion 147 and the protruded sloped surfaces 136 and 167.

As can be seen in the enlarged view of FIG. 7, the gap G is formed between the sloped surface of the variable portion 147 and the protruded sloped surfaces 136 and 167. Accordingly, when the sloped surface of the variable portion 147 is lifted, the gap G between the sloped surface of the variable portion 147 and the protruded sloped surfaces 136 and 167 is reduced, and when the sloped surface of the variable portion 147 is lowered, the gap G' (Please see FIG. 8) between the sloped surface of the variable portion 147 and the protruded sloped surfaces 136 and 167 is increased.

When the gap G is increased, the amount of fluid flowing to the bypass flow channel 160 is increased, and when the gap G is decreased, the amount of fluid flowing to the bypass flow channel 160 is decreased. Thus, the gap G can be adjusted by moving the variable portion 147 in a vertical direction by manipulating the manipulation portion 148. Thus, the variable portion 147, the manipulation portion 148, and the coupling portion 146 may be collectively referred to as a gap adjusting unit.

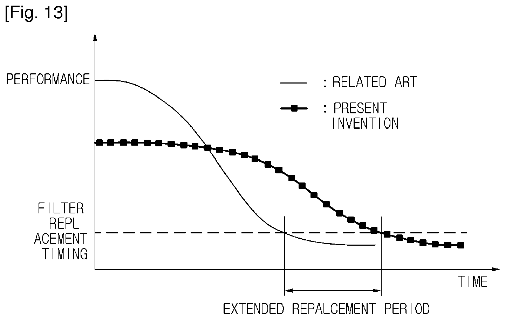

FIG. 13 is a graph showing a relationship between filter performance and time when a certain amount of flow is bypassed as in the present invention and when the entire amount of flow is allowed to pass through a filter.

As illustrated in FIG. 13, it can be seen that when a certain amount of flow is bypassed, in case of a water softener, the performance of the filter, namely, a removal rate of dissolved solids, is not high due to the bypassing, but a time duration for replacement is lengthened in comparison to the case in which the entire amount of flow is allowed to pass through a filter without bypassing.

When a great deal of filtering is performed by a filter, namely, as more dissolved solids is removed, better quality of water can be obtained but the life span of the filter is shortened. Thus, according to the user need or when water of a certain area contains less dissolved solids, the filter head according to an embodiment of the present invention can increase the amount of bypassing to increase the life span of the filter, and can decrease the amount of bypassing when water of a corresponding area contains a great deal of dissolved solids.

Table 1 shows a removal rate of dissolved solids when a portion of water is bypassed according to an embodiment of the present invention.

### Table 1

**[Table 1]**

| Filter pass flow | | | Bypass flow | | | Overall flow | | | Bypass flow/Overall flow rate |
|---|---|---|---|---|---|---|---|---|---|
| Filter pass flow | Content of dissolved solids | Removal rate | Bypass flow | Content of dissolved solids | Removal rate | Overall flow | Content of dissolved solids | Removal rate | |
| 8.0 | 17.30 | 94.49 | 0.00 | 314.0 | 0 | 8 | 17.30 | 94.49 | 0.00 |
| 7.5 | 15.83 | 94.96 | 0.50 | 314.0 | 0 | 8 | 34.46 | 89.02 | 0.06 |
| 7.0 | 14.22 | 95.47 | 1.00 | 314.0 | 0 | 8 | 51.69 | 83.54 | 0.13 |
| 6.5 | 12.56 | 96.00 | 1.50 | 314.0 | 0 | 8 | 69.08 | 78.00 | 0.19 |
| 6.0 | 10.86 | 96.54 | 2.00 | 314.0 | 0 | 8 | 86.64 | 72.41 | 0.25 |

Here, the unit of flow is litre/min.

As can be seen from Table 1, even in the case that a portion of the flow is bypassed, the removal rate is not sharply reduced, and by changing the flow of bypassing according to a state of introduced raw water or required quality of soft water or purified water to be used, the life span of the filter can be increased.

Also, the filter head according to an embodiment of the present invention can be used in a water purifier.

A water purifier generally uses several filters, so bypassing a partial flow, excluding the case of a filter for removing initial undesirable chemical (or foreign objects), results in leaving minerals in purified water. Thus, by adjusting the amount of minerals contained therein, the quality of drinking water can be enhanced and the life span of the filter can be increased.

In the above description, the method of adjusting the gap by moving the variable portion as a gap adjusting unit in a vertical direction is presented, but in this case, of course, it may also be configured such that the gap G between the wall surfaces 135 and 164 and the blocking portion 141 of the first opening and closing unit 140 is changed by moving the variable portion in a horizontal direction, rather than in the vertical direction.

Also, in the foregoing embodiment, it is described that the first opening and closing unit 140 is replaced or the first opening and closing unit 140 includes the variable portion 147; however, of course, the same effect can be obtained by replacing the second opening and closing unit 150 or by allowing the second opening and closing unit 150 to have the variable portion, and also, the first opening and closing unit 140 and the second opening and closing unit 150 may be changed together.

Besides, for example, in case in which a component for removing scales from a pipe is included in the filter 200 mounted in the filter head 100, the component for removing scales from a pipe included in the filter 200 may be dissolved when a partial flow of raw water introduced through the inflow portion 110 flows through the filter 200, and expelled through the outflow portion 111, while the remaining flow of the raw water may be expelled to the outflow portion 111 after passing through the bypass flow channel 160, whereby a scale removal solution for removing scales from a pipe can be easily generated. Besides the scale removal solution, a material can be easily generated through mixing and dissolving.

## Claims

1. A filter head having a filter head main body (101) comprising:
an inflow passage (130) communicating with an inflow portion (110);
an outflow passage (170) communicating with an outflow portion (111);
a filter introduction hole (120) communicating with the inflow passage (130), to which an introduction portion (210) of a filter (200) is connected when the filter (200) is mounted to allow a partial flow of a fluid introduced through the inflow portion (110) to be introduced to the filter (200);
a filter discharge hole (121) communicating with the outflow passage (170), to which a discharge portion (220) of the filter (200) is connected when the filter (200) is mounted to allow a fluid which has passed through the filter(200) to be expelled through the outflow portion (111);
first and second opening and closing units (140, 150) provided in the filter head main body (101) such that, when the filter (200) is mounted, the first and second opening and closing units (140, 150) allow the inflow passage (130) and the filter introduction hole (120), and the outflow passage (170) and the filter discharge hole (121), to communicate with each other, respectively, and when the filter (200) is separated, the first and second opening and closing units (140, 150) do not allow the inflow passage (130) and the filter introduction hole (120), and the outflow passage (170) and the filter discharge hole (121), to communicate with each other, respectively
**characterized in that**:
a bypass flow channel (160) connects the inflow passage (130) and the outflow passage (170) and allows the remaining flow of the fluid introduced through the inflow portion (110) to pass therethrough so as to be expelled together with the fluid which has passed through the filter (200), through the outflow portion (111); and
wherein the first and second opening and closing units (140, 150) are configured to allow a partial flow of the fluid introduced through the inflow portion (110) to pass through the bypass flow channel when the filter is mounted, and
a gap (G) is formed between the filter head main body (101) and the first and second opening and closing units (140, 150) when the filter (200) is mounted in order to allow a partial flow of the fluid introduced through the inflow portion (110) to pass through the bypass flow channel (160),
one or more of the first and second opening and closing units (140, 150) include a gap adjusting unit for adjusting the gap (G), and
the gap adjusting unit includes a manipulation portion (148) protruded to the outside of the filter head main body (101) and a variable portion (147) changing a width of the gap (G) according to an operation of the manipulation portion (148).

2. The filter head of claim 1, wherein the first and second opening and closing units (140, 150) include pressing portions (143, 153) formed in a lower portion thereof, blocking portions (141, 151) with seals (142, 152) formed on an outer circumference thereof, and guide portions (144, 145) formed in an upper portion thereof and guiding a movement, respectively,
wherein elastic members (145, 155) are disposed between the first and second opening and closing units (140, 150) and the filter head main body (101) in order to press the first and second opening and closing units (140, 150) toward the filter introduction hole (120) and the filter discharge hole (121).

3. The filter head of claim 1, wherein the first and second opening and closing units (140, 150) are configured to allow the entirety of the fluid introduced through the inflow portion (110) to be expelled to the outflow portion (111) through the bypass flow channel (160) when the filter (200) is separated.

4. The filter head of claim 1, wherein the filter head main body (101) is configured to form a gap (G) with the first and second opening and closing units (140, 150) in a vertical direction between the inflow passage (130) and the outflow passage (170), and
the variable portion (147) adjusts the height of the first and second opening and closing units (140, 150) such that the gap (G) between the filter head main body (101) and the first and second opening and closing units (140, 150) is adjusted in a vertical direction.

5. The filter head of claim 4, wherein the variable portion (147) is coupled to a main body of the first or second opening and closing unit (140, 150) and adjust the height of the first or second opening and closing unit (140, 150) by rotating the manipulation portion (148).

6. The filter head of claim 1, wherein the filter head main body (101) includes a cover (180) configured to be separated from the filter head main body (101) at an upper side of the first or second opening and closing unit(140, 150).

7. A filter assembly comprising:
the filter head (100) of any one of the preceding claims; and
a filter (200) mounted in the filter head (100).

8. A water treatment apparatus comprising the filter assembly of claim 7.

## Patentansprüche

1. Filterkopf mit einem Filterkopfhauptkörper (101), umfassend:
einen Einströmkanal (130), der mit einem Einströmbereich (110) in Verbindung steht;
einen Ausströmkanal (170), der mit einem Ausströmbereich (111) in Verbindung steht;
eine Filtereinführöffnung (120), die mit dem Einströmbereich (130) in Verbindung steht, mit dem ein Einführabschnitt (210) eines Filters (200) verbunden ist, wenn der Filter (200) montiert ist, um einen Teilstrom eines durch den Einströmbereich (110) eingeleiteten Fluids in den Filter (200) einführen zu können;
eine Filterauslassöffnung (121), die mit dem Ausströmkanal (170) in Verbindung steht, mit dem ein Auslassabschnitt (220) des Filters (200) verbunden ist, wenn der Filter (200) montiert ist, um ein Fluid, das durch den Filter (200) hindurchgegangen ist, durch den Ausströmbereich (111) austreiben zu können;
erste und zweite Öffnungs- und Schließeinheiten (140, 150), die in dem Filterkopfhauptkörper (101) derart vorgesehen sind, dass, wenn der Filter (200) montiert ist, die ersten und zweiten Öffnungs- und Schließeinheiten (140, 150) es dem Einströmkanal (130) und der Filtereinführöffnung (120) sowie dem Ausströmkanal (170) und der Filterauslassöffnung (121) ermöglichen, miteinander in Verbindung zu stehen, und wenn der Filter (200) getrennt ist, die ersten und zweiten Öffnungs- und Schließeinheiten (140, 150) es dem Einströmkanal (130) und der Filtereinführöffnung (120) und dem Ausströmkanal (170) und der Filterauslassöffnung (121) nicht ermöglichen, miteinander in Verbindung zu stehen,
**dadurch gekennzeichnet, dass**:
ein Bypassströmungskanal (160) den Einströmkanal (130) und den Ausströmkanal (170) verbindet und den Reststrom des durch den Einströmbereich (110) eingeleiteten Fluids passieren lässt, damit dieses zusammen mit dem Fluid, das durch den Filter (200) hindurchgegangen ist, durch den Ausströmungsbereich (111) ausgetrieben wird; und
wobei die ersten und zweiten Öffnungs- und Schließeinheiten (140, 150) konfiguriert sind, um einen Teilstrom des durch den Einströmbereich (110) eingeleiteten Fluids durch den Bypassströmungskanal passieren zu lassen, wenn der Filter montiert ist, und ein Spalt (G) zwischen dem Filterkopfhauptkörper (101) und den ersten und zweiten Öffnungs- und Schließeinheiten (140, 150) gebildet ist, wenn der Filter (200) montiert ist, um einen Teilstrom des durch den Einstrombereich (110) eingeleiteten Fluids durch den Bypassströmungskanal (160) hindurchtreten zu lassen,
wobei eine oder mehrere der ersten und zweiten Öffnungs- und Schließeinheiten (140, 150) eine Spalteinstelleinheit zum Einstellen des Spalts (G) beinhalten, und
die Spalteinstelleinheit einen Manipulationsabschnitt (148), der zur Außenseite des Filterkopfhauptkörpers (101) vorsteht, und einen variablen Abschnitt (147), der eine Breite des Spaltes (G) gemäß einer Betätigung des Manipulationsabschnitts (148) ändert, beinhaltet.

2. Filterkopf nach Anspruch 1, wobei die ersten und zweiten Öffnungs- und Schließeinheiten (140, 150) Pressabschnitte (143, 153), die in einem unteren Abschnitt davon ausgebildet sind, Blockierabschnitte (141, 151) mit Dichtungen (142, 152), die an einem Außenumfang davon ausgebildet sind, und Führungsabschnitte (144, 145), die in einem oberen Abschnitt davon ausgebildet sind und eine Bewegung führen, beinhalten, wobei elastische Elemente (145, 155) zwischen den ersten und zweiten Öffnungs- und Schließeinheiten (140, 150) und dem Filterkopfhauptkörper (101) angeordnet sind, um die ersten und zweiten Öffnungs- und Schließeinheiten (140, 150) gegen die Filtereinführöffnung (120) und die Filterauslassöffnung (121) zu drücken.

3. Filterkopf nach Anspruch 1, wobei die ersten und zweiten Öffnungs- und Schließeinheiten (140, 150) so konfiguriert sind, dass die Gesamtheit des durch den Einströmbereich (110) eingeleiteten Fluids durch den Bypassströmungskanal (160) in den Ausströmbereich (111) ausgetrieben werden kann, wenn der Filter (200) getrennt wird.

4. Filterkopf nach Anspruch 1, wobei der Filterkopfhauptkörper (101) konfiguriert ist, um mit den ersten und zweiten Öffnungs- und Schließeinheiten (140, 150) einen Spalt (G) in einer vertikalen Richtung zwischen dem Einströmkanal (130) und dem Ausströmkanal (170) zu bilden, und
der variable Abschnitt (147) die Höhe der ersten und zweiten Öffnungs- und Schließeinheit (140, 150) so einstellt, dass der Spalt (G) zwischen dem Filterkopfhauptkörper (101) und den ersten und zweiten Öffnungs- und Schließeinheiten (140, 150) in einer vertikalen Richtung eingestellt ist.

5. Filterkopf nach Anspruch 4, wobei der variable Abschnitt (147) mit einem Hauptkörper der ersten oder zweiten Öffnungs- und Schließeinheiten (140, 150) gekoppelt ist und die Höhe der ersten oder zweiten Öffnungs- und Schließeinheiten (140, 150) durch Drehen des Manipulationsabschnitts (148) einstellt.

6. Filterkopf nach Anspruch 1, wobei der Filterkopfhauptkörper (101) eine Abdeckung (180) beinhaltet, die konfiguriert ist, um vom Filterkopfhauptkörper (101) an einer Oberseite der ersten oder zweiten Öffnungs- und Schließeinheiten (140, 150) getrennt zu werden.

7. Filteranordnung, umfassend:
den Filterkopf (100) nach einem der vorhergehenden Ansprüche; und
einen Filter (200), der in dem Filterkopf (100) montiert ist.

8. Wasserbehandlungsvorrichtung, umfassend die Filteranordnung nach Anspruch 7.

## Revendications

1. Tête de filtre ayant un corps principal de tête de filtre (101) comprenant :
un passage d'écoulement entrant (130) communiquant avec une partie d'écoulement entrant (110) ;
un passage d'écoulement sortant (170) communiquant avec une partie d'écoulement sortant (111) ;
un trou d'introduction de filtre (120) communiquant avec le passage d'écoulement entrant (130), auquel une partie d'introduction (210) d'un filtre (200) est connectée lorsque le filtre (200) est monté pour permettre un écoulement partiel d'un fluide introduit à travers la partie d'écoulement entrant (110) devant être introduit dans le filtre (200) ;
un trou de décharge de filtre (121) communiquant avec le passage d'écoulement sortant (170), auquel une partie de décharge (220) du filtre (200) est connectée lorsque le filtre (200) est monté pour permettre à un fluide qui est passé à travers le filtre (200) d'être expulsé à travers la partie d'écoulement sortant (111) ;
des première et seconde unités d'ouverture et de fermeture (140, 150) prévues dans le corps principal de tête de filtre (101) de sorte que, lorsque le filtre (200) est monté, les première et seconde unités d'ouverture et de fermeture (140, 150) permettent au passage d'écoulement entrant (130) et au trou d'introduction de filtre (120), ainsi qu'au passage d'écoulement sortant (170) et au trou de sortie de filtre (121), de communiquer entre eux, respectivement, et lorsque le filtre (200) est séparé, les premier et les secondes unités d'ouverture et de fermeture (140, 150) ne permettent pas au passage d'écoulement entrant (130) et au trou d'introduction de filtre (120), ainsi qu'au passage d'écoulement sortant (170) et au trou de décharge de filtre (121) de communiquer entre eux, respectivement,
**caractérisé en ce que** :
un canal d'écoulement de dérivation (160) connecte le passage d'écoulement entrant (130) et le passage d'écoulement sortant (170) et permet à l'écoulement restant du fluide introduit à travers la partie d'écoulement entrant (110) de passer à travers celui-ci afin d'être expulsé avec le fluide qui est passé à travers le filtre (200), à travers la partie d'écoulement sortant (111) ; et
dans laquelle les première et seconde unités d'ouverture et de fermeture (140, 150) sont configurées pour permettre à un écoulement partiel du fluide introduit à travers la partie d'écoulement entrant (110) de passer à travers le canal d'écoulement de dérivation lorsque le filtre est monté, et
un espace (G) est formé entre le corps principal de tête de filtre (101) et les première et seconde unités d'ouverture et de fermeture (140, 150) lorsque le filtre (200) est monté afin de permettre un écoulement partiel du fluide introduit à travers la partie d'écoulement entrant (110) de passer à travers le canal d'écoulement de dérivation (160),
une ou plusieurs des première et seconde unités d'ouverture et de fermeture (140, 150) comprennent une unité de réglage d'espace permettant de régler l'espace (G), et
l'unité de réglage d'espace comprend une partie de manipulation (148) faisant saillie à l'extérieur du corps principal de tête de filtre (101) et une partie variable (147) modifiant une largeur de l'espace (G) selon une opération de la partie de manipulation (148).

2. Tête de filtre selon la revendication 1, dans laquelle les première et seconde unités d'ouverture et de fermeture (140, 150) comprennent des parties de pression (143, 153) formées dans une partie inférieure de celles-ci, des parties de blocage (141, 151) avec des joints d'étanchéité (142, 152) formées sur une circonférence extérieure de celles-ci, et des parties de guidage (144, 145) formées dans une partie supérieure de celles-ci et guidant un déplacement, respectivement,
dans laquelle des éléments élastiques (145, 155) sont disposés entre les première et seconde unités d'ouverture et de fermeture (140, 150) et le corps principal de tête de filtre (101) afin de presser les première et seconde unités d'ouverture et de fermeture (140, 150) vers le trou d'introduction de filtre (120) et le trou de décharge de filtre (121).

3. Tête de filtre selon la revendication 1, dans laquelle les première et seconde unités d'ouverture et de fermeture (140, 150) sont configurées pour permettre à la totalité du fluide introduit à travers la partie d'écoulement entrant (110) d'être expulsée vers la partie d'écoulement sortant (111) à travers le canal de dérivation (160) lorsque le filtre (200) est séparé.

4. Tête de filtre selon la revendication 1, dans laquelle le corps principal de tête de filtre (101) est configuré pour former un espace (G) avec les première et seconde unités d'ouverture et de fermeture (140, 150) dans une direction verticale entre le passage d'écoulement entrant (130) et le passage d'écoulement sortant (170), et
la partie variable (147) ajuste la hauteur des première et seconde unités d'ouverture et de fermeture (140, 150) de sorte que l'espace (G) entre le corps principal de tête de filtre (101) et les première et seconde unités d'ouverture et de fermeture (140, 150) est ajusté dans une direction verticale.

5. Tête de filtre selon la revendication 4, dans laquelle la partie variable (147) est couplée à un corps principal de la première ou de la seconde unité d'ouverture et de fermeture (140, 150) et ajuste la hauteur de la première ou de la seconde unité d'ouverture et de fermeture (140, 150) en tournant la partie de manipulation (148).

6. Tête de filtre selon la revendication 1, dans laquelle le corps principal de tête de filtre (101) comprend un couvercle (180) configuré pour être séparé du corps principal de tête de filtre (101) au niveau d'un côté supérieur de la première ou de la seconde unité d'ouverture et de fermeture (140, 150).

7. Ensemble filtre comprenant :
la tête de filtre (100) selon l'une quelconque des revendications précédentes ; et
un filtre (200) monté dans la tête de filtre (100).

8. Appareil de traitement d'eau comprenant l'ensemble filtre de la revendication 7.
